# EUROPEAN PATENT APPLICATION

(11) **EP 1 939 805 A1**
(43) Date of publication of application: **02.07.2008**
(21) Application number: 07255012.2
(22) Date of filing: 21.12.2007
(51) Int. Cl.: G06Q 40/00

(54) **Portfolio selection for custom indices of public securities based on state of domicile of issuing company**

(30) Priority: 22.12.2006 US 871614 P
(71) Applicant: X-Shares Advisors LLC, New York, NY 10170 (US)
(72) Inventor: Feldmann, Jeffrey L., Princeton, NJ 08540 (US)
(74) Representative: Maury, Richard Philip

(57) **Abstract**

A method and system are provided for creating an investment vehicle associated with a geographic region, the investment vehicle including a plurality of securities issued by companies. That method comprises forming a set of securities based on inclusion criteria, and categorizing the securities according to geographic region, where the geographic region of a security may be determined based at least in part on the presence of a headquarters location of the issuing company in the geographic region. A predetermined number of securities associated with the geographic region of the investment vehicle are selected from the set of securities for inclusion in the investment vehicle, and the resulting investment vehicle is made available for trading. According to other preferred aspects of the invention, the inclusion of a company in the investment vehicle may also be based in part on market capitalization, or on the number of employees within the geographic region, or based on whether the company is listed on a particular exchange.

## Description

### RELATED APPLICATION

This application claims benefit of provisional A.N. 60/871,614, filed December 22, 2006, the entire content of which is hereby incorporated herein by reference.

### BACKGROUND OF THE INVENTION

In recent years, a demand has arisen for ever more-specialized and tightly-focused investment. Conventional vehicles such as mutual funds and unit investment trusts offer the ability to invest in a collection of companies, but the companies in a given fund typically are selected based on their size, their perceived potential for growth, their potential for containing value not recognzied by the market, etc., and a fund may include debt and money-market instruments with an eye to positioning the risk in investing in the fund at the desired level. Again, conventional investment vehicles may be limited to holdings in companies that are traded on a particular stock exchange, or to ones that are active in a given country.

What has not generally been possible in conventional investments is to provide an investment vehicle capable of focusing on a much narrower segment of the economy. For example, it is often desirable to be able to invest in companies that are actively pursuing a particular economic or technological goal, such as the cure for a particular disease. A technique for providing a vehicle for making such an investment has disclosed in a commonly-assigned application, A.N. 10/920,267, the entire disclosure of which is incorporated herein by reference.

Nonetheless, it has not been possible to invest just in companies that are active in, for example, a narrow geographical region, such as a particular State or province of the United States or of Canada, or a particular region of country, except by means of the investor identifying and selecting individual companies that are active in the area in question and investing in those companies one by one. It would be desirable to provide an investment vehicle that would make it possible to invest in companies active in a particular geographic region even if the region in question is not an entire country.

### SUMMARY OF THE INVENTION

Accordingly, it is one object of the present invention to provide such an investment vehicle, which enables investment in the enterprises of a particular geographic region.

This object is achieved, according to the present invention, by providing a method for creating an investment vehicle associated with a geographic region, the investment vehicle including a plurality of securities issued by companies. That method comprises forming a set of securities based on inclusion criteria, and categorizing the securities according to geographic region, where the geographic region of a security may be determined based at least in part on the presence of a headquarters location of the issuing company in the geographic region. A predetermined number of securities associated with the geographic region of the investment vehicle are selected from the set of securities for inclusion in the investment vehicle, and the resulting investment vehicle is made available for trading. According to other preferred aspects of the invention, the inclusion of a company in the investment vehicle may also be based in part on market capitalization, or on the number of employees within the geographic region, or based on whether the company is listed on a particular exchange. The geographic region may be a state or province forming a part of a country, or a region made up of several states or administrative subdivisions (for example, several departments in France, or one or more Länder in Germany, etc.), or portions of several different such states, provinces or administrative subdivisions. Additionally, the companies included in the investment vehicle may be weighted according to the number of employees of the company within the region, or the total number of the company's employees.

According to another aspect of the invention is provided a system for creating and administering an investment vehicle associated with a geographic region, the investment vehicle including a plurality of securities issued by companies. The system comprises means for receiving information defining a set of inclusion criteria, and information defining a geographic criterion. A processor is provided, and is arranged to form a set of securities based on the inclusion criteria, and to categorize the securities according to geographic region, the geographic region of a security being determined based at least in part on the geographic criterion. The system also has interface means for presenting to an operator a display of at least those securities, of the set of securities, which are in a single category based on geographic region, and for receiving from the operator a selection of a predetermined number of securities associated with the geographic region of the investment vehicle from the set of securities for inclusion in the investment vehicle.

Other aspects, features and advantages of the present invention will be more clearly understood form the following description. Taken in conjunction with the attached drawings.

### BRIEF DESCRIPTION OF THE DRAWING

Fig. 1 is a flow chart illustrating generally a method of forming an investment vehicle according to a preferred embodiment of the present invention.

Fig. 2 is a schematic diagram illustrating a system for use in implementing such method.

### DETAILED DESCRIPTION OF THE PREFERRED EMBODIMENTS

The present invention will now be described in detail with reference to what are at present the preferred embodiments. It will be understood, however, that the invention is not limited to these embodiments.

It is particularly contemplated that the present invention is put into practice by using it to form an investment vehicle in the form of exchange-traded funds, and the following description will be based on this as an illustration of the general method. Also, the method will be described with particular reference to a case in which the geographic regions of interest are individual States of the United States, although it be plain from the foregoing that the present invention is not limited to that choice of region.

An exchange-traded fund ("ETF") is an investment company which offers shares that are listed on a national securities exchange. Shares of ETFs, because they are listed on a stock exchange, can be traded throughout the day on that stock exchange at market-determined prices. ETFs typically invest predominantly in the securities of companies comprising an underlying index. As such, the ETF itself is an index fund.

The present invention is described with particular reference to StateShares™, Inc., an investment company with 22 series of underlying fund portfolios, as an example. Each Fund offers shares, known as StateShares™ that are listed on the New York Stock Exchange ("NYSE"). StateShares™ are not individually redeemable by the Funds but trade on the NYSE in individual share lots. Each Fund seeks to invest in a portfolio of securities that substantially replicates a particular benchmark index (the "Underlying Index"). For example, X-Shares Advisors, LLC (the "Advisor") may serve as the investment advisor to each of these Funds.

The Underlying Indexes are designed to track various geographic sub-sectors of the economy and serve as (i) performance benchmarks for portfolio managers and investors who invest in securities of these issuers, (ii) performance yardsticks for issuers in these geographic areas, and (iii) vehicles for directing attention to regional investments and allocations within the U.S. economy. Each Fund focuses on a different geographic index. In the exemplary preferred embodiment, the Underlying Indexes have been designed geographically in each of the following areas:
1) California
2) Colorado
3) Connecticut
4) Florida
5) Georgia
6) Illinois
7) Indiana
8) Maryland
9) Massachusetts
10) Michigan
11) Minnesota
12) Missouri
13) New Jersey
14) New York
15) North Carolina
16) Ohio
17) Pennsylvania
18) Tennessee
19) Texas
20) Virginia
21) Washington
22) Composite

Each Fund is focused on one of these geographical indexes and provides both institutional and retail investors with the ability to invest in the largest companies domiciled within each represented state. To create these Funds, it is necessary to establish specific, defined characterization/inclusion/exclusion criteria (the "Index Methodology") that an issuer must meet in order to be included in an Underlying Index. Each Underlying Index can be maintained by the creator of the Funds, or by an outside third party, such as Standard & Poor's; in either case, this administrator is hereinafter termed the "Index Administrator", and employs the Index Methodology to determine the composition of each Underlying Index. The day-to day management of each Fund's portfolio involves principally reconfiguring the portfolio of each Fund at periodic intervals, typically annually, to reflect any reconfiguration in the Underlying Index by the Index Administrator.

According to the preferred embodiment, when determining the composition of each Underlying Index, the Index Administrator first looks for publicly traded companies with securities listed on a major national securities exchange and with market capitalizations greater than $100 million for at least two of the three preceding calendar quarters. Companies are then ranked by revenue and earnings using data from the company's last audited financial statements in order from the highest to lowest with the remaining companies ranked by highest revenue for companies with negative or no earnings. For each Underlying Index (except for the Composite Index), the universe of eligible securities includes only companies with a headquarters or principal place of business in the state indicated in the name of its Underlying Index. The top 50 companies by market capitalization are then selected and weighted according to the weighting rules described below. The Composite Index is comprised of the largest 500 companies, determined by market capitalization, taken from a non-duplicative list of all companies eligible for inclusion in the state-specific Underlying Indices. The Index Methodology, however, is not limited to this specific example. Any of the specific numbers used in this example can be varied without departing from the broad scope of the present invention. For example, more or fewer than the top 50 companies could be selected, and of course a different selection criterion could be used in addition to (or instead of) market capitalization. Also, the Composite Index could be compiled based on the criterion that to be included a company must have either its headquarters or principal place of business in the region, or have a place of business that meets a set threshold, such as a particular number of employees, a certain minimum amount of annual volume of business, or the like.

Companies selected for inclusion in an Underlying Index are weighted according to FW's proprietary weighting system that overweight the largest employers at inception or reconstitution/rebalancing, and are thereafter weighted based upon the individual company's market value relative to the overall market value of the relevant Underlying Index (i.e., price weighted). The portfolio is reconstituted and rebalanced annually at which time some or all of the constituents may change. Each issuer represented in the Index is assigned a weight factor based upon total employees. Each security's index weighting is expressed as a percentage of total weight. Information about each Underlying Index, including the component securities in each Underlying Index and value of the securities in each Underlying Index, is preferably posted throughout the trading day.

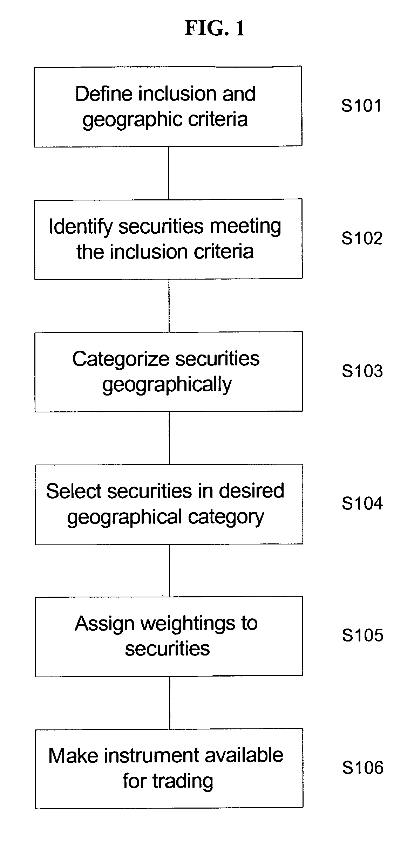

As illustrated in Fig. 1, therefore, an initial step (S101) is to define the inclusion criteria that a security must meet to be considered for inclusion in the investment vehicle being created, as well as geographical criteria that will be used to determine which companies have the desired relation to the region of interest. Then, securities that meet the inclusion criteria are identified (step S102), and are categorized according to the geographical criteria (step S103). From those securities that are in the desired geographical category, a selection is made of the securities that will actually be included in the investment vehicle (step S104). As described, this selection may be based on market capitalization of the companies, with or without consideration of other characteristics of the companies, and the selection may be made so as to include a specific predetermined number of securities in the investment vehicle, e.g., 50. If desired, weightings can then be assigned to the securities that are in the investment vehicle or instrument (step S105), and the investment vehicle is then made available for trading (step S106).

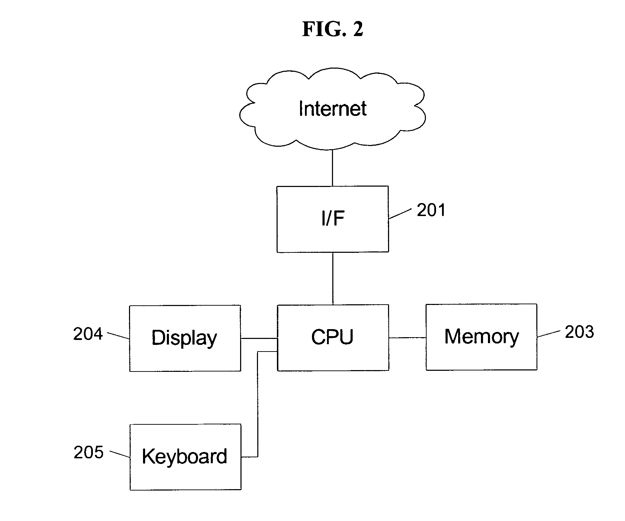

An example of a system that can be used to create (and if desired can also be used to administer an investment vehicle according to the present invention) is shown schematically in Fig. 2. In the example shown, an interface 201 is connected to a source of relevant information, which may be received via the Internet (as shown). Alternatively, the interface 201 or other means can be used to receive the needed information from a local source. A processor that includes a CPU 202, memory 203 that includes a portion storing permanent software, including an operating system software and relevant application software, and also a portion that can be used to execute that software. perform calculations A display system 204 is provided, and may for example be an LCD or plasma or other flat screen monitor, or any other display system capable of changing display content in real time and of showing the required amount of information. An input means is provided as well, shown here as a keyboard 205, by means of which a user or operator may input instructions. The CPU 202 executes the necessary program software to receive data through interface 201 and store the data in the memory system 203, to cause information from memory system 203 to be displayed on display system 204, and to receive and execute instructions via keyboard 205. Elements 201-205 may for example be a conventional desktop or laptop computer system.

When the system illustrated in Fig. 2 is used to construct an investment vehicle according to the present invention, the user or operator causes the processor to obtain the necessary information from memory 203 or, if the information is not already present there, from a local or remote source. The operator is requested to input one or more criteria to be used in deciding which securities are even to be considered for inclusion in the investment vehicle, as well as one or more criteria to be used in categorizing the companies whose securities are included according to geography. Also, the operator selects via keyboard 205 which of the categories to use as the basis for the investment vehicle being created, and then selects the companies that are to be used. If the number of companies to be used is not permanently fixed, the operator will also be asked to input this number, for example at the same time as the inclusion criteria and geographical criteria are input.

Traditional mutual fund shares are issued by, and redeemed from, a fund at any time for cash at the shares' net asset value (NAV). NAV is typically calculated only once a day and reflects a fund's total assets, less its liabilities, divided by the number of shares it has outstanding. In determining the value of its assets, a traditional mutual fund typically values its underlying securities as of the close of trading on the NYSE. As a result, no matter what time during the day an investor in a traditional mutual fund places an order to purchase or redeem shares, that investor's order will be priced at that fund's NAV determined as of the close of trading of the NYSE. Traditional mutual fund shares may be purchased from the fund directly by the shareholder or through a financial intermediary.

In contrast, StateShares™ cannot be purchased from, or redeemed by, the issuing Fund except by or through a Participating Organization (defined below), and then only for an in-kind basket of securities. An organized secondary market is expected to exist for the StateShares™, unlike traditional mutual fund shares, because StateShares™ are listed for trading on the NYSE. As a result, investors can purchase and sell StateShares™ on the secondary market through a broker. Secondary-market transactions do not take place at NAV but at market prices that change throughout the day, based on the supply of, and demand for, StateShares™. Shareholders will also incur typically brokerage and transaction costs when buying or selling StateShares™ on the secondary market.

Although the market price of StateShares™ typically approximates its NAV, there may be times when the market price and the NAV differ, so you may receive more or less than NAV when you sell your StateShares™ on the secondary market. Also, it is possible that an active trading market may not be maintained.

Preferably, each Fund issues and redeems shares only in lots of a predetermined size, e.g., 100,000 shares. These lots are known as Creation Units. Purchasing or redeeming a Creation Unit can be done only by Participating Organization or through a broker that is a Participating Organization. For example, a Participating Organization may be a firm that is either a member of the Continuous Net Settlement System of the National Securities Clearing Corporation (NSCC) or a Depository Trust Company (DTC) participant that has executed a Participant Agreement with the Funds' distributor, (the "Distributor"). Because Creation Units can be purchased or redeemed only in exchange for a basket of securities likely to cost millions of dollars, it is expected that only a limited number of institutional investors will purchase and redeem shares directly with the Funds. These arrangements are designed to protect shareholders of the Funds from the potentially adverse effects that may be caused by the need to make frequent purchases and sales of portfolio securities as a result of cash inflows and outflows, as experienced in a traditional mutual fund. For example, in a traditional mutual fund, redemptions can result in adverse tax consequences on non-redeeming taxable shareholders because the mutual fund must sell portfolio securities to raise cash to pay redemptions. These sales may generate taxable capital gains which are then distributed to all shareholders, including non-redeeming shareholders. In contrast, the in-kind redemption mechanism of the Funds will enable the Funds to meet redemption requests without the need to sell portfolio securities and, as a result, redemptions from the Funds will generally not have any tax impact on the non-redeeming shareholders.

Any investor may purchase StateShares™ on the secondary market through a broker, and it is contemplated that StateShares™ are publicly traded on the NYSE.

### OVERVIEW OF THE INVESTMENT OBJECTIVES

### AND STRATEGIES OF THE FUNDS

Each Fund's investment objective is to seek to track the performance, before fees and expenses, of a particular Underlying Index. The Advisor uses a passive, or indexing, approach in managing the Funds. Unlike many mutual funds, the Funds do not seek to outperform any particular market sector and will not assume temporary defensive positions when markets decline or appear overvalued. Each Fund may, for example, invest at least 90% of its assets in the common stocks of companies in the Underlying Index. Because each Underlying Index, with the exception of StateShares™ Composite Index, is comprised only of stocks as indicated by its name (e.g., only "Indiana " domiciled companies are contained in the S&P Custom/StateShares™ Indiana 50 Index), this means that each Fund will invest at least 90% of its assets in such companies. The Funds may provide shareholders with at least 60 days' notice of any change in these policies. Each Fund may also invest up to, e.g., 10% of its assets in futures contracts, options on futures contracts, options, swaps on securities of companies in the Underlying Index, as well as cash and cash equivalents, such as money market instruments (subject to applicable limitations of the Investment Company Act of 1940, as amended (the "1940 Act")). Each Fund may, for example, attempt to replicate the Underlying Index by matching the weighting of securities in its portfolio with such securities' weightings in the Underlying Index. In managing the Funds, the Advisor seeks a correlation of, e.g., 0.95 or better between each Fund's performance and the performance of the Underlying Index. (A figure of 1.00 would represent perfect correlation.) There is of course no guarantee that the Advisor will be able to obtain this level of correlation.

From time to time, it may not be possible, for regulatory or other legal reasons, to replicate the Underlying Index and in such cases the Advisor may pursue a sampling strategy in managing the portfolio. Pursuant to this strategy, a Fund may invest the remainder of its assets in securities of companies not included in an Underlying Index if the Advisor believes that such securities will assist the Fund in tracking the Underlying Index. If a Fund pursues a sampling strategy, it will continue to invest at least, e.g., 90% of its assets in the common stocks of the companies in the Underlying Index. See the section titled "Principal Strategies And Related Risks", below, for more information about the use of a sampling strategy.

Limitations and restrictions on the level of investment in securities that are discussed herein and that are expressed in terms of percentage limitations are measured at the time of investment, unless specifically indicated otherwise. Changes in market values that cause a percentage limitation to be exceeded would not necessarily require that securities be sold.

The following is a summary of the principal investment policies, strategies and risks of each of the Funds, according to the preferred embodiment. (Again, further relevant information can be found in the "Principal Strategies and Related Risks" below, and in the section titled "Statement of Additional Information".)

A Fund of California companies will now be discussed as a further example.

### StateShares™ California 50 Exchange-Traded Fund

The Fund seeks to track the performance, before fees and expenses, of the mentioned California 50 Index. The Fund employs a "passive management" investment strategy designed to track the performance of the California 50 Index, an index of securities of issuers domiciled in California that meet certain revenue and income criteria and that have been identified as "California" domiciled companies by the Index Administrator and therefore are included in the California 50 Index. A "California company", for purposes of this example, is a company whose headquarters or principal place of business is located in California.

As its primary strategy, the Fund attempts to replicate the Underlying Index by investing substantially all of its assets in the stocks that make up the Underlying Index, holding each stock in approximately the same proportion as its weighting in the Underlying Index. The Fund will invest at least 90% of its assets in common stocks of companies in the Underlying Index. Because the Underlying Index is comprised of only stocks of California companies, this means that the Fund will invest at least 90% of its assets in California companies, as discussed above. The Fund will provide shareholders with at least 60 days' notice of any change in these policies. The Fund may also invest up to 10% of its assets in futures contracts, options on futures contracts, options, swaps on securities of companies in the Underlying Index, as well as cash and cash equivalents, such as money market instruments (subject to applicable limitations of the 1940 Act). The Fund may also sample, rather than replicate, the Underlying Index by holding stocks that, in the aggregate, are intended to approximate the Underlying Index in terms of key characteristics, such as price/earnings ratio, earnings growth, and dividend yield. If the Fund pursues a sampling strategy, it will continue to invest at least 90% of its assets in the common stocks of companies in the Underlying Index.

The Fund is subject to certain risks. Certain of these risks are described below, and more detail is provided in the section "Principal Strategies and Related Risks" below.
The Fund is subject to stock market risk, which is the risk that stock prices overall will decline over a given period of time. The Fund's total return, like stock prices generally, will fluctuate within a wide range, so an investor could lose money over short or even long periods. Stock markets tend to be volatile, with periods of rising prices and periods of falling prices.
The Fund is subject to index risk, which is the risk that stocks in the Underlying Index may under-perform fixed income investments or stock market investments that track other markets, segments or sectors. The Advisor does not actively manage the Fund and therefore does not attempt to analyze, quantify or control the risks associated with investing in stocks of companies in the Underlying Index.
The Fund is subject to investment style risk, which is the risk that, to the extent that the Fund's assets are invested in small- and mid-capitalization stocks, the returns from these small- and mid-capitalization stocks will trail returns from the overall stock market. Historically, these stocks have been more volatile in price than the large-capitalization stocks.
The Fund is subject to index sampling risk, which is the risk that, when employing a sampling strategy, the stocks held by the Fund will not provide investment performance tracking the Underlying Index.
The Fund is subject to market price risk, which is the risk associated with the fact that the StateShares™ are listed on the New York Stock Exchange (NYSE) and can be bought and sold in the secondary market at market prices. Although it is expected that the market price of the StateShares™ typically will approximate its NAV, there may be times when the market price and the NAV differ significantly.
The Fund may be subject to geographic concentration risk. The Fund will invest substantially all of its assets in the securities of companies headquartered in California. These companies may also generate significant revenue from, and conduct a significant amount of business within, California. As a result, these companies may be impacted by events and conditions impacting California and its economy to a greater extent than a company whose headquarters are not located in that state. For example, political and economic conditions and changes in regulatory, tax, or economic policy in California could significantly affect companies doing business in that State. To the extent the Fund invests in these types of companies, it is subject to these risks. However, companies headquartered in California may be national or international in nature and may therefore generate a substantial, or even a predominant, amount of its business and revenue from outside California. These companies may be impacted to a lesser degree by events and conditions impacting California and its economy and would be impacted to a much greater degree by events and conditions in those areas where significant amounts of its business or revenue are generated.
The Fund is subject to secondary market risk. Although the StateShares™ are listed for trading on the NYSE, it is possible that an active trading market may not be maintained. Trading of the StateShares™ on the NYSE may be halted if NYSE officials deem such action appropriate, if the StateShares™ are delisted from the NYSE or if the activation of market-wide "circuit breakers" halts stock trading generally.
The Fund is subject to derivatives risk, which is the risk associated with stock futures and options contracts, warrants, convertible securities, and swap agreements, which are types of derivatives. Investments in derivatives may subject the Fund to risks different from, and possibly greater than, those of the underlying securities, assets, or market indexes.

The Fund sells and redeems StateShares™ only in Creation Units and principally on an in-kind basis for portfolio securities of the Underlying Index.

The Fund issues and redeems shares at NAV and only in Creation Unit blocks of 100,000. As a practical matter, only institutions or large investors purchase or redeem Creation Units. A standard Creation Unit transaction fee may be charged for each purchase of Creation Units, regardless of the number of Creation Unit shares acquired. An investor redeeming Creation Unit shares may be charged a standard redemption transaction fee of, e.g., $500, regardless of the number of Creation Unit shares redeemed.

### PRINCIPAL STRATEGIES AND RELATED RISKS

The following section provides more information about the Funds, the Underlying Indexes and the principal investment strategies and risks that are common to each Fund.

### ADDITIONAL INVESTMENT STRATEGIES

Under normal circumstances, each Fund may, for example, invest at least 90% of its assets in common stocks of companies in the Underlying Index. Because each Underlying Index, with the exception of the Composite Index, is comprised only of stocks as indicated by its name (e.g., only "Indiana" companies are contained in the StateShares™ Indiana 50 Index), this means that each Fund will invest at least 90% of its assets in such companies. The StateShares™ Composite Exchange-Traded Fund will invest at least 90% of its assets in companies contained in the State-Specific Indices. Each Fund may also invest up to 10% of its assets in futures contracts, options on futures contracts, options, swaps on securities of companies in the Underlying Index, as well as cash and cash equivalents such as money market instruments (subject to applicable limitations of the 1940 Act). Each Fund's investment objective is fundamental and may not be changed without a shareholder vote.

In addition to the Funds' principal investment strategies, each Fund may, from time to time, use certain other strategies or engage in certain other investment practices that are not principal strategies. In addition to these strategies and practices, each Fund may invest in investment-grade debt securities (i.e., debt obligations classified within the four highest ratings of a nationally recognized statistical rating organization such as Moody's Investors Service ("Moody's") or Standard & Poor's ("S&P") or, if unrated, determined by the Advisor to be of comparable quality). Each Fund may also hold cash and/or invest a portion of its assets in U.S. Government securities, high-quality money market instruments and repurchase agreements collateralized by the foregoing obligations. These other investments and strategies are described in detail in the Funds' Statement of Additional Information.

### MORE INFORMATION ABOUT THE FUNDS' PRINCIPAL RISKS

Index Risk. The Funds employ a "passive management" or indexing investment approach. Each Fund attempts to track the investment performance of its Underlying Index. Whenever practicable, each Fund uses the replication method as its primary strategy, meaning that it holds the same stocks, in approximately the same proportions, as the stocks in the Underlying Index, regardless of their investment merit. Because each Fund is a passively managed index fund, the Advisor does not attempt to analyze individual companies or to quantify, manage or control the risks associated with investing in individual companies or in a portfolio that replicates the Underlying Index. Although index funds, by their nature, tend to be tax-efficient investment vehicles, tax ramifications are not considered in the passive management of index funds like the Funds. This risk is known as Index Risk.

Index Sampling Risk. From time to time, however, regulatory constraints or other legal considerations may prevent a Fund from replicating precisely an Underlying Index. This may occur for a number of reasons. For example, the Funds are taxed as regulated investment companies under the Internal Revenue Code of 1986, as amended (the "Code"), and the Code imposes certain percentage limitations applicable to investments by regulated investment companies. To the extent a strict application of the replication methodology would result in a violation of the Code, the Fund would be prevented from replicating the Underlying Index. Similarly, other regulatory constraints, such as limitations on the ability of a Fund to invest more than a certain percentage in illiquid securities, may also prevent the Fund from precisely replicating an Underlying Index. In these circumstances, the Fund will employ a strategy known as "sampling" whereby the Fund will invest in securities that, in the aggregate, are deemed by the Advisor to approximate the Underlying Index in terms of key characteristics. The Advisor will not use a sampling strategy in an attempt to manage the portfolio but will do so only when it is required to do so by regulatory or legal considerations. To the extent the Fund employs a sampling strategy, it is subject to index sampling risk, which is the risk that the securities selected by the Advisor pursuant to this strategy may not, in fact, provide investment performance that closely tracks the Underlying Index.

Stock Market Risk. The Funds are subject to stock market risk, which is the chance that stock prices overall will decline. Stock markets tend to be volatile, with periods of rising prices and periods of falling prices.

Investment Style Risk. Each Fund invests across large-, mid-, and small-capitalization companies depending on the composition of the Underlying Index. The Advisor makes no effort to manage the capitalization exposure of the Fund's portfolio. The Index Methodology with respect to each Underlying Index, however, generally requires a minimum capitalization of at least $100 million for at least two of the three preceding quarters. From time to time, depending on the construction of the Underlying Index, a Fund may invest a substantial portion of its assets in and medium-size companies. Such investments entail greater risk than investments in larger, more established companies. Medium-size companies often have narrower markets and more limited managerial and financial resources than larger, more established companies. As a result of these risks and uncertainties, an investor may lose some or all of his investment in the Funds.

Geographic Concentration Risk. Because the StateShares™ Exchange-Traded Funds will invest all of their assets in the securities of companies headquartered in a single state, with the exception of the StateShares™ Composite Fund, such Funds may be impacted by events or conditions affecting that state to a greater extent than a fund that did not focus its investments on companies headquartered in a single state. For example, political and economic conditions and changes in regulatory, tax, or economic policy in a state could significantly affect the market in that state. To the extent a Fund invests in these types of companies, it is subject to these risks. However, companies headquartered in a particular state may be national or international in nature and may therefore generate a substantial, or even a predominant, amount of its business and revenue from outside that state. These companies may be impacted to a lesser degree by events and conditions impacting that state and its economy and would be impacted to a much greater degree by events and conditions in those areas where significant amounts of its business or revenue are generated.

Derivatives Risk. Each Fund may invest, to a limited extent, in derivatives. Derivatives may involve risks different from, and possibly greater than, those of traditional investments. To track their Underlying Indexes as closely as possible, the Funds attempt to remain fully invested in stocks. The Funds may invest, to a limited extent, in stock futures and options contracts, warrants, convertible securities, and swap agreements, which are types of derivatives. Generally speaking, a derivative is a financial contract whose value is based on the value of a traditional security (such as a stock or bond), an asset (such as a commodity like gold), or a market index (such as the S&P 500 Index). Investments in derivatives may subject a Fund to risks different from, and possibly greater than, those of the underlying securities, assets, or market indexes. Losses (or gains) involving futures can sometimes be substantial--in part because a relatively small price movement in a futures contract may result in an immediate and substantial loss (or gain) for a Fund. Similar risks exist for warrants (securities that permit their owners to purchase a specific number of stock shares at a predetermined price), convertible securities (securities that may be exchanged for another asset), and swap agreements (contracts between parties in which each agrees to make payments to the other based on the return of a specified index or asset). The Funds will not use derivatives for speculation or for the purpose of leveraging (magnifying) investment returns.

Market Price Risk. The market price of shares of the Funds may differ from the Fund's NAV. StateShares™ are listed for trading on the NYSE and can be bought and sold in the secondary market at market prices. Although it is expected that the market price of the StateShares™ typically will approximate its NAV, there may be times when the market price and the NAV differ significantly.

The market price of StateShares™, like the price of any exchange-traded security, includes a "bid-asked spread" charged by the exchange specialist and other market-makers that cover the particular security. While the Fund cannot predict, and does not control, whether or when the StateShares™ will trade at a premium or a discount to NAV, it is likely that in times of severe market disruption, the bid-asked spread will increase significantly and the StateShares™ would most likely be traded at a discount to NAV. In addition, any discount is likely to be greatest when the price of StateShares™ is falling fastest. Preferably, the Funds' website will show the prior day's closing NAV and closing market price for the Funds' shares. In addition, the Funds' website will preferably contain the following information, on a per share basis, for each Fund: (a) the prior business day's net asset value and the Bid/Ask Price and a calculation of the premium or discount of the Bid/Ask Price at the time of calculation of the net asset value against such net asset value; and (b) data in chart format displaying the frequency distribution of discounts and premiums of the daily Bid/Ask Price against the net asset value, within appropriate ranges, for each of the four previous calendar quarters. In addition, the Funds' website contains information regarding the premiums and discounts at which shares of the Funds have traded.

Secondary Market Risk. An active secondary market for the StateShares™ may not exist. Although the StateShares™ are listed on the NYSE, it is possible that an active trading market may not be maintained. In addition, trading in the StateShares™ on the NYSE will be halted whenever trading in equity securities generally is halted by the activation of market-wide "circuit breakers," which are tied to large decreases in the Dow Jones Industrial Average. Trading of the StateShares™ also will be halted if (1) the shares are delisted from the NYSE without first being listed on another exchange, or (2) NYSE officials determine that such action is appropriate in the interest of a fair and orderly market or to protect investors. If trading is halted, eligible investors (see below) will still be able to purchase Creation Units of the Funds directly and redeem such units with the Funds. If StateShares™ are delisted from the NYSE, the Company will consider what appropriate action to take, which may include, among other things, seeking to list StateShares™ on another national securities exchange, converting the Fund to a traditional mutual fund, or redeeming the Shares at NAV.

### MORE INFORMATION ABOUT THE UNDERLYING INDEXES

In developing each Underlying Index, the inventor has established specific criteria for characterization, inclusion and exclusion governing the stocks that are included in each Underlying Index. Each Underlying Index is generally reconstituted on, for example, an annual basis. Decisions regarding additions to, and removals from, each individual Underlying Index are made by the Index Administrator, on a annual basis, in its sole discretion. See "Information About the Underlying Index and Index Administrator" in the section titled "Statement of Additional Information", below. Generally, only the replication method will be employed in adjusting the Funds' portfolio in response to changes in the Underlying Index, but it may sometimes be necessary to employ a sampling strategy with respect to a Fund's portfolio. The Funds are not actively managed.

### BUYING AND SELLING SHARES ON THE SECONDARY MARKET

Shares can be bought or sold throughout the trading day like shares of any publicly traded security. In such an instance, there is no minimum dollar amount that must be invested and no minimum number of Fund shares that must be bought, unless such a minimum is imposed by the broker.

### BUYING SHARES DIRECTLY FROM A FUND

It is possible to purchase shares directly from a Fund only in Creation Units or multiples thereof. Each Fund issues Creation Units in blocks of, for example, 100,000 shares. For any particular Fund, the number of Fund shares in a Creation Unit will not change over time, except in the event that the Fund splits or revalues its shares. The Funds will not issue fractional Creation Units. Creation Units may be purchased only in exchange for a basket of securities - known as the In-Kind Creation Basket and cash equal to the Cash Component, as discussed further below. The Funds reserve the right to reject any purchase request at any time, for any reason, and without notice. The Funds can stop selling shares or postpone payment of redemption proceeds at times when the NYSE is closed or under any emergency circumstances as determined by the SEC.

As stated above, to purchase shares directly from a Fund, it is necessary to be a Participating Organization, or to purchase through a broker that is Participating Organization. A Participating Organization is a participant of the Continuous Net Settlement System of the National Securities Clearing Corporation ("NSCC") or the Depository Trust Company ("DTC") that has executed a Participant Agreement with the Fund's distributor. Most Participating Organizations are expected to be brokerage firms.
In-Kind Creation Basket. On each business day, prior to the opening of trading on the NYSE, the Fund's Advisor will post on the NSCC bulletin board the In-Kind Creation Basket for each Fund for that day. The In-Kind Creation Basket will identify the name and number of shares of each security that must be contributed to the Fund for each Creation Unit purchased. Each Fund may accept a nonconforming creation basket.
Cash Component. In addition to the in-kind deposit of securities, it is possible either to pay to, or receive from, the Fund an amount of cash (the Balancing Amount) equal to the difference between the NAV of a Creation Unit and the value of the securities in the creation basket. The Balancing Amount ensures that the consideration paid by an investor for a Creation Unit is exactly equal to the value of the Creation Unit. The Fund's Advisor will publish, on a daily basis, information about the previous day's Balancing Amount. There may also be a transaction fee, described below, in cash. The Balancing Amount and the transaction fee, taken together, are referred to as the Cash Component.
Placement of Purchase Orders. All purchase orders must be placed through a Participating Organization. Purchase orders will be processed either through a manual clearing process run by, e.g., DTC or through an enhanced clearing process that is available only to those DTC participants that also are participants in the Continuous Net Settlement System of the NSCC. Participating Organizations that do not use the NSCC's enhanced clearing process will be charged a higher transaction fee (discussed below). A purchase order must be received by the Fund's Distributor prior to the close of regular trading on the NYSE (generally 4:00 p.m., Eastern time) on the day the order is placed, and all other procedures set forth in the Participant Agreement must be followed, in order for you to receive the NAV determined on that day.
Transaction Fee on Purchase of Creation Units. The Funds impose a transaction fee in the amount of, e.g., $500 on each purchase of Creation Units effected through the NSCC's enhanced clearing process, regardless of the number of units purchased. For an investor purchasing Creation Units through the manual DTC clearing process, the transaction fee could reach a larger amount, e.g., $2,500. Investors permitted to tender a nonconforming creation basket would be subject to an additional charge commensurate with the cost to the Fund. The transaction fee is paid to the Fund, not to the distributor, the Advisor or a third party. The fee protects existing shareholders of the Fund from the costs associated with issuing

### Creation Units.

Preferably, shares of the Funds are held in book entry form, which means that no stock certificates are issued. The DTC, or its nominee, will be the registered owner of all outstanding shares of the Fund, and the investor's beneficial ownership of shares will be shown on the records of DTC or its participants through which the investor holds the shares.

### REDEEMING SHARES DIRECTLY FROM A FUND

As mentioned, it is only possible to redeem shares of the Funds only in Creation Units or multiples thereof. Shares can be redeemed directly with a Fund only by a Participating Organization or through a broker that is a Participating Organization. Units may be redeemed only in exchange for a basket of securities - known as the In-Kind Redemption Basket and cash equal to the Cash Component, as discussed further below.
In-Kind Redemption Basket. Redemption proceeds will be paid in kind with a basket of securities known as the In-Kind Redemption Basket. In most cases, the In-Kind Redemption basket will be the same as the In-Kind Creation Basket for that same day. There will be times, however, when the creation and redemption baskets differ. The composition of the In-Kind Redemption Basket will be available on the NSCC bulletin board. Each Fund reserves the right to honor a redemption request with a nonconforming redemption basket, with the consent of the redeeming investor.
Cash Component. Depending on whether the NAV of a Creation Unit is higher or lower than the value of the redemption securities, the investor will either receive from or pay to the Fund a Balancing Amount in cash. If a Balancing Amount is due, the amount actually received by the investor may be reduced by the amount of the applicable transaction fee. The Balancing Amount and the transaction fee, taken together, are referred to as the Cash Component.
Placement of Redemption Orders. As with purchases, redemptions must be processed either through the DTC process or the enhanced NSCC process. A redemption order is deemed received on the date of transmittal if it is received by the distributor prior to the close of regular trading on the NYSE on that date, and if all other procedures set forth in the Participant Agreement are followed.
Transaction Fee on Redemption of Creation Units. The Funds impose a transaction fee on each redemption of Creation Units. The amount of the transaction fee on redemptions effected through the NSCC and the DTC, and on nonconforming redemptions, is the same as the fee imposed on comparable purchases (see previous section). As with the transaction fee on purchases, the transaction fee on redemptions is paid to the Fund, not to the Advisor, the distributor or a third party. The fee protects existing shareholders of the Fund from the costs associated with redeeming Creation Units.

There may be legal risks unique to investors purchasing Creation Units directly from the Fund. Because new Fund shares may be issued on an ongoing basis, a "distribution" of Fund shares could be occurring at any time. Certain activities could, depending on the circumstances, result in one being deemed a participant in the distribution, in a manner that could render one a statutory underwriter and subject one to the prospectus delivery and liability provisions of the Securities Act of 1933 (the "Securities Act"). For example, one could be deemed a statutory underwriter if one purchases Creation Units from the issuing Fund, breaks them down into the constituent Fund shares, and sells those shares directly to customers, or if one were to choose to couple the creation of a supply of new Fund shares with an active selling effort involving solicitation of secondary-market demand for Fund shares. Whether a person is an underwriter depends upon all of the facts and circumstances pertaining to that person's activities, and the examples mentioned here are not intended to be a complete description of all the activities that could cause one to be deemed an underwriter.

Dealers who are not "underwriters" but are participating in a distribution (as opposed to engaging in ordinary secondary-market transactions), and thus dealing with Fund shares as part of an "unsold allotment" within the meaning of Section 4(3)(C) of the Securities Act, will be unable to take advantage of the prospectus delivery exemption provided by Section 4(3) of the Securities Act.

Section 12(d)(1) of the 1940 Act restricts investments by registered investment companies in securities of other registered investment companies, including the Funds. The acquisition of Fund shares by registered investment companies is subject to the restrictions of Section 12(d)(1) of the 1940 Act, except as may at some future time be permitted by an exemptive order that permits registered investment companies to invest in a Fund beyond the limits of Section 12(d)(1), subject to certain terms and conditions, including that the registered investment company enter into an agreement with the Fund regarding the terms of the investment.

In the preferred embodiment, shares of one Fund may not be exchanged for shares of another Fund.

Unlike frequent trading of shares of a traditional open-end mutual funds (i.e., not exchange-traded) shares, frequent trading of shares of the Funds on the secondary market does not disrupt portfolio management, increase the Funds' trading costs, lead to realization of capitalization gains, or otherwise harm fund shareholders because these trades do not involve the Funds directly. A few institutional investors are authorized to purchase and redeem the Funds' shares directly with the Funds. Because these trades are effected in-kind (i.e., for securities, and not for cash), they do not cause any of the harmful effects (noted above) that may result from frequent cash trades. Moreover, each Fund imposes transaction fees on in-kind purchases and redemptions of the Fund to cover the custodial and other costs incurred by the Fund in effecting in-kind trades. These fees increase if an investor substitutes cash in part or in whole for securities, reflecting the fact that the Fund's trading costs increase in those circumstances. For these reasons, the Board of Directors has determined that it is not necessary to adopt policies and procedures to detect and deter frequent trading and market-timing in shares of the Funds.

The Funds are passively managed to their Underlying Indexes and may sell securities regardless of how long they have been held in order to replicate its Underlying Index. In some cases, the Funds' annual turnover rate may exceed 100%. A higher rate of portfolio turnover will result in higher transaction costs, including brokerage commissions. Also, to the extent that higher portfolio turnover results in more frequently realized net gains to a Fund, the Fund's distributions of taxable income may increase.

Each Fund adopts a Distribution and Service Plan (the "Rule 12b-1 Plan") pursuant to which each Fund may pay financial intermediaries a fee of up to .25% of its average daily net assets for distribution and other services provided by that intermediary in accordance with the terms of the Rule 12b-1 Plan. If such fees are paid, they would increase the costs associated with investments in the Funds and decrease each Funds' NAV because these fees are paid by the Funds. These fees would be paid out of the Funds' assets on an on-going basis, and therefore, over time these fees will increase the cost of the investment and may cost more than paying other types of sales charges.

Preferably, it is contemplated that each Fund publicly disseminates its full portfolio holdings each day the Funds are open for business through an internet web site. In addition, it is contemplated that the In-Kind Creation Basket and In-Kind Redemption Basket, which identify the securities and share quantities which are delivered in exchange for purchases and redemptions of Creation Units, are publicly disseminated daily prior to the open of the NYSE via the NSCC. A description of the Funds' policies and procedures with respect to the disclosure of the Funds' portfolio securities is available in the Statement of Additional Information.

The net asset value, or NAV, of each Fund's shares is calculated each business day as of the close of regular trading on the NYSE, generally 4:00 p.m., Eastern Time. NAV per share is computed by dividing the net assets by the number of shares outstanding.

The approximate value of shares of each Fund is preferably disseminated periodically, e.g., every fifteen seconds throughout the trading day, by the national securities exchange on which the Fund's shares are listed or by other information providers, such as Reuters. This approximate value should not be viewed as a "real-time" update of the NAV, because the approximate value may not be calculated in the same manner as the NAV, which is computed once a day. The approximate value generally is determined by using both current market quotations and/or price quotations obtained from broker-dealers that may trade in the portfolio securities held by the Funds.

When calculating the NAV of the Funds' shares, stocks held by the fund are valued at their market value when reliable market quotations are readily available. Certain short-term debt instruments used to manage a Fund's cash are valued on the basis of amortized cost.

When reliable market quotations are not readily available, securities are priced at their fair value, which is the price a security's owner might reasonably expect to receive upon its sale. A Fund also may use fair-value pricing if the value of a security it holds has been materially affected by events occurring before the Fund's pricing time but after the close of the primary markets or exchanges on which the security is traded. This most commonly occurs with foreign securities, which may trade on foreign exchanges that close many hours before the Fund's pricing time. Intervening events might be company-specific (e.g., earnings report, merger announcement); country-specific (e.g., natural disaster, economic or political news, act of terrorism, interest rate change); or global. Intervening events include price movements in U.S. markets that are deemed to affect the value of foreign securities. Fair-value pricing may also be used by each Fund to value restricted securities held by the Funds or certain small-capitalization or mid-capitalization securities with little or no trading activity for extended periods of time. Although rare, fair-value pricing also may be used for domestic securities--for example, if (1) trading in a security is halted and does not resume before the Fund's pricing time or if a security does not trade in the course of a day, and (2) the Fund holds enough of the security that its price could affect the Fund's NAV.

Fair-value prices are determined by the Advisor according to procedures adopted by the Board of Directors. When fair-value pricing is employed, the prices of securities used by a Fund to calculate its NAV may differ from quoted or published prices for the same securities.

While the invention has been described with particular reference to the embodiment that is preferred at present, those skilled in the relevant arts will understand that many modifications and variations are possible without departing from the scope of the invention, which, therefore, is defined by the terms of the following claims, and not by the foregoing description.

## Claims

1. A method for creating an investment vehicle associated with a geographic region, the investment vehicle including a plurality of securities issued by companies, the method comprising the steps of:
forming a set of securities based on inclusion criteria;
categorizing the securities according to geographic region, the geographic region of a security being determined based at least in part on the presence of a headquarters location of the issuing company in the geographic region;
selecting a predetermined number of securities associated with the geographic region of the investment vehicle from the set of securities for inclusion in the investment vehicle; and
making the investment vehicle available for trading.

2. The method of Claim 1, wherein the securities are selected for inclusion in the investment vehicle based at least in part on market capitalization.

3. The method of Claim 1, wherein the geographic region is a state.

4. The method of Claim 1, wherein the inclusion criteria comprise exchange listing and market capitalization.

5. The method of Claim 1, wherein the geographic region of a security is determined at least in part on a total number of employees of the issuing company within the geographic region.

6. The method of Claim 1, further comprising the step of weighting each selected security based on a total number of employees of the issuing company.

7. The method of Claim 1, further comprising the step of repeating said selecting step from time to time.

8. The method of Claim 1, further comprising the step of calculating an index value from time to time, the index value being based on market values of the securities selected in said selecting step.

9. The method of Claim 8, further comprising the step of calculating an underlying-index value from time to time, the underlying-index value being based on market values of the securities that are in the set of securities and that are categorized in the same geographical region as are the securities that are selected in said selecting step, and comparing the index value to the underlying-index value.

10. A method for creating an investment vehicle associated with a geographic region, the investment vehicle including a plurality of securities issued by companies, the method comprising the steps of:
defining a set of inclusion criteria, and defining a geographic criterion;
forming a set of securities based on the inclusion criteria;
categorizing the securities according to geographic region, the geographic region of a security being determined based at least in part on the geographic criterion;
selecting a predetermined number of securities associated with the geographic region of the investment vehicle from the set of securities for inclusion in the investment vehicle; and
making the investment vehicle available for trading.

11. A system for creating and administering an investment vehicle associated with a geographic region, the investment vehicle including a plurality of securities issued by companies, the system comprising:
means for receiving information defining a set of inclusion criteria, and information defining a geographic criterion;
a processor arranged to:
a) form a set of securities based on the inclusion criteria, and
b) categorize the securities according to geographic region, the geographic region of a security being determined based at least in part on the geographic criterion; and
interface means for presenting to an operator a display of at least those securities, of the set of securities, which are in a single category based on geographic region, and for receiving from the operator a selection of a predetermined number of securities associated with the geographic region of the investment vehicle from the set of securities for inclusion in the investment vehicle.
